Europäisches Patentamt

(19) European Patent Office (11) Publication number: **0 053 425**
Office européen des brevets **A2**

(12) **EUROPEAN PATENT APPLICATION**

(21) Application number: **81301554.2** (51) Int. Cl.³: **B 60 R 1/06**

(22) Date of filing: **09.04.81**

(30) Priority: **28.11.80 GB 8038323**

(43) Date of publication of application: **09.06.82**
**Bulletin 82/23**

(84) Designated Contracting States: **DE FR IT**

(71) Applicant: **SURREY STEEL COMPONENTS LIMITED,**
**Trinity Road, Richmond Surrey TW9 2LG (GB)**

(72) Inventor: **Parry, Michael Bernard, Bramble Park St.**
**Minver, Wadebrigde Cornwall PL27 6RD (GB)**

(74) Representative: **Bayliss, Geoffrey Cyril et al, BOULT,**
**WADE & TENNANT 27 Furnival Street, London EC4A 1PQ**
**(GB)**

(54) Vehicle rear view mirror assemblies.

㋝ This invention relates to rear view mirror assemblies.

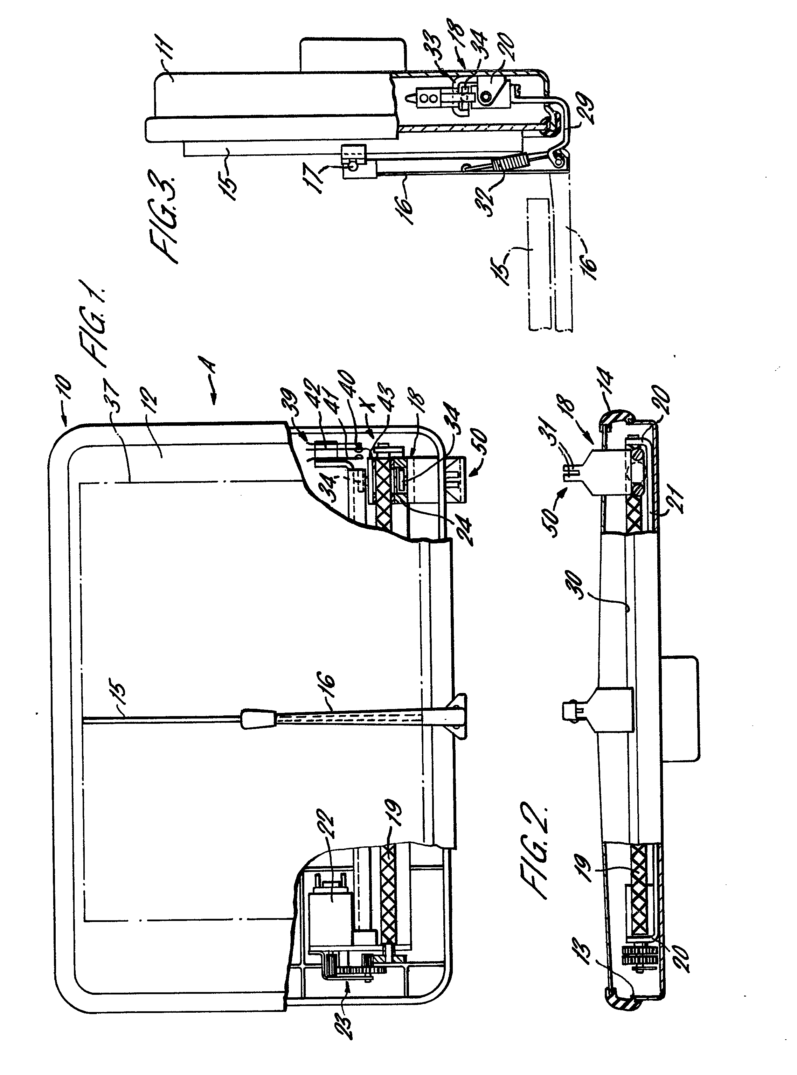

Figure 1 shows a rear view mirror assembly, generally indicated at 10, having a mirror 12. A wiper blade 15 is mounted on an arm 16 to wipe across the surface of the mirror 12. The arm 16 is mounted by means of a movable carriage 18 on a double helical screw 19. The double helical screw 19 is drivingly connected to a motor 22. The carriage 18 engages the helical screw 19 such that on rotation of the screw 19 the carriage 18 is driven axially back and forth along the screw 19. This movement causes the wiper blade 15 to be swept across the surface of the mirror 12 within the area of delineated by the line 37.

Alternatively, the carriage 18 may be driven by a single-handed lead screw, the direction of rotation of the motor being reversed each time the wiper blade 15 reaches the end of a sweep across the mirror 12.

Thus, the wiper blade 15 and arm 16 can be parked to one side of the mirror 12 where they do not obstruct the central portion of mirror 12.

It is particularly envisaged that such rear view mirrors would be used on trucks and other commercial vehicles.

## VEHICLE REAR VIEW MIRROR ASSEMBLIES

This invention relates to vehicle rear view mirror assemblies of the type in which a mirror is supported by a hollow body and a wiper for wiping at least part of the viewed surface of the mirror has a drive means mounted within the body.

A known assembly of the aforesaid type is disclosed in United Kingdom Patent Specification No. 849533. In that known assembly, the mirror is circular and formed of glass, and a rotary drive shaft of the drive means projects through a central hole in the mirror, a radial wiper being fixed to the projecting portion of the rotary drive shaft. The known assembly has a number of disadvantages. For example, the wiper blade always extends across and obstructs the mirror, including the central portion of it, whether or not the wiper is being driven. Also, the wiper can wipe only a circular part of the mirror; if used with generally rectangular mirrors, which are common and in some cases compulsory, the known assembly would not wipe the corners of the mirror. A further disadvantage of the known assembly is that it is necessary to drill a hole through the mirror glass.

The present invention provides an assembly of the aforesaid type in which the drive means includes a motor driven lead screw mounted within the body, a driving connection being provided between the lead screw and the wiper for moving the wiper across the mirror surface in response to rotation of the lead screw. Thus, the wiper can be parked at the edge of the mirror so that the wiper does not obstruct the central portion of the mirror. Also, the wiper can wipe substantially the whole of the viewed surface of a generally rectangular mirror. Furthermore, there is no need for the drive connection to pass through the mirror, and therefore no hole need be drilled in the mirror.

The drive means preferably includes means to cause the wiper to be moved back and forth across the mirror. Thus, the wiper blade will wear more evenly than in the known assembly.

A specific embodiment of the invention will now be described with reference to the accompanying drawings in which:

Figure 1 is a partly cut away front view of a rear view mirror a carriage of which is shown in both its operative and its parked positions;

Figure 2 is a view from below of Figure 1;

Figure 3 is a view on the arrow A of Figure 1;

Figure 4 is an enlarged view of the area designated X in Figure 1;

Figure 5 is a cross-sectional view of Figure 4 along the line Y-Y; and

Figure 6 is a circuit diagram of the power supply to a motor of the mirror shown in Figure 1.

Figure 7 is a view similar to Figure 1 of a modified rear view mirror according to the invention;

Figure 8 is a circuit diagram for the mirror illustrated in Figure 7; and

Figure 9 illustrates a modification of the mirror shown in Figure 7.

Figure 1-3 show a rear view mirror, generally indicated at 10, having a generally rectangular cross-section body 11. The body 11 is generally in the form of a box and has a mirror 12 mounted in the open mouth 13 thereof by means of a sealing strip 14. A wiper blade 15 is supported to extend across the width of the mirror 12 by means of arm 16.

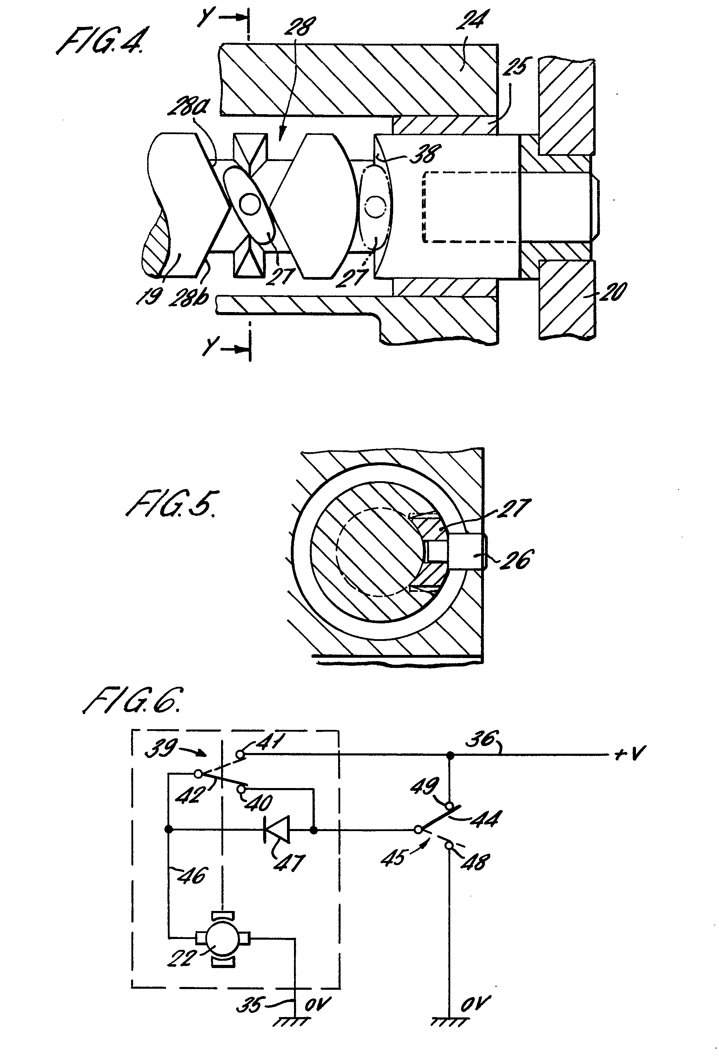

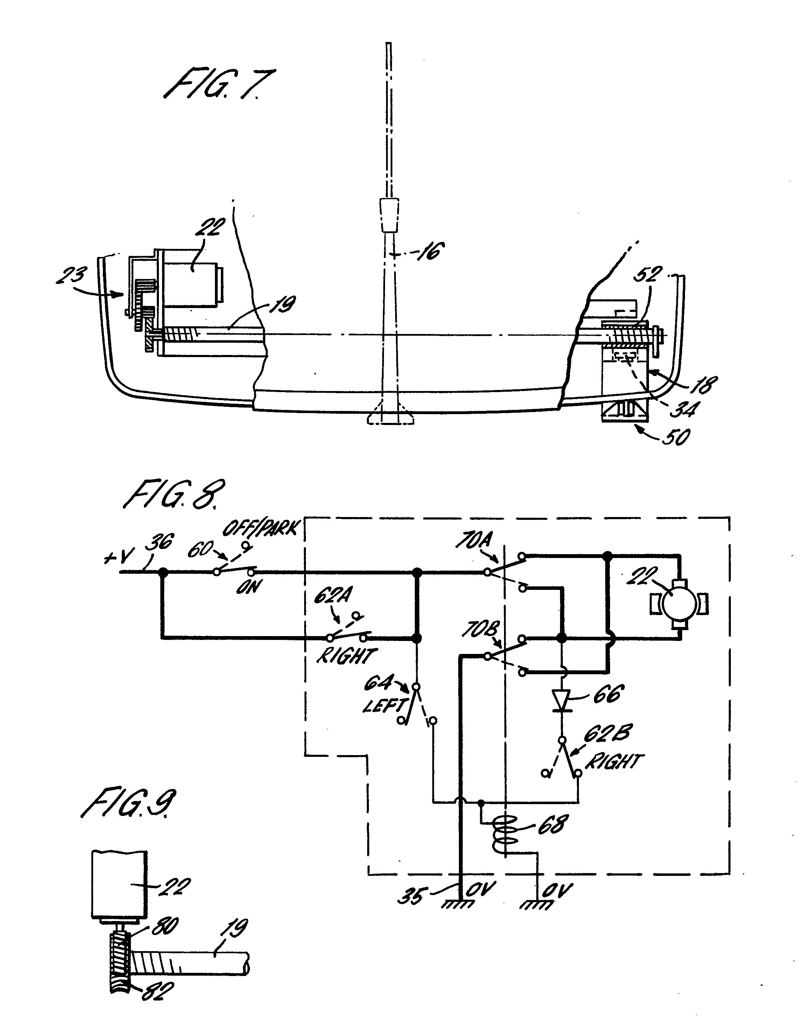

As can be seen in Figure 3, the connection 17 between the wiper blade and arm 16 is a pivotable connection.

The arm 16 is in turn mounted on the body by means of a carriage, generally indicated at 18, which is in turn mounted on a double helical screw 19 which is mounted on the body 10 to extend across the greater part of the length thereof and parallel to the adjacent side of the body 11.

The screw 19 is rotatably mounted in this position by a pair of spaced upstanding flanges 20, formed by the ends of a plate 21, which is secured to the base of the body 11. A motor 22 is also secured to one flange 20 and is drivingly coupled to the screw 19 by means of a gear train 23.

The carriage 18 includes generally a cylindrical body 24 which encircles the screw 19 and is supported thereon by bearing sleeves 25. The body 24 carries a pivot pin 26, which in turn supports an elliptical shoe 27 to project inwardly of the body 24 to locate in a groove 28a of double helical groove 28 of screw 19.

The body 24 supports, at its lower end, a generally L-shaped cantilever 29 which extends through an elongate slot 30 in the lower edge of the body 11.

The cantilever 29 is formed with a pair of spaced flanges 31, between which flanges is pivotably mounted the arm 16. A spring 32 engages the arm 16 adjacent its mid-point and is further mounted on the cantilever 29 adjacent its free end. The spring urges the arm 16 towards the mirror 12 so that the wiper blade 15 is held in engagement with the mirror 12.

A generally U-shaped plate 33 is mounted on the base of the body 11 to carry a pair of spaced reaction rollers 34. The rollers 34 are disposed relative to the body 24 to prevent the body 24 tilting under the action of spring 32.

In use, power is supplied, via lead 36 (see Figure 6) to the motor 22. The motor is thus caused to rotate the screw 19 via gear train 23. As the screw 19 rotates the shoe 27 is driven along the groove 28, and hence the body 24 and its cantilever 29 are driven axially along the rotating screw 19. This axial movement of the carriage 18 causes corresponding movement of the arm 16 and hence the wiper blade 15. The wiper blade 15 therefore wipes across the area of the viewed surface of the mirror 12 indicated in chain line at 37.

Referring to Figure 4 when the shoe 27 reaches an end of the groove 28, the direction of the shoe is reversed by curved groove portion 38 and the shoe then enters the other groove 28b of the double helical groove 28 and the direction of movement of the carriage 18 is reversed. This reversal happens at each end of the screw 19 until the supply power to the motor is stopped. Thus it will be appreciated that the blade 15 is swept backwards and forwards over the area delineated by line 37.

Referring now to Figures 1 and 6 a two-way switch generally indicated at 39 is located at the opposite end of screw 19 to the motor 22. The switch 29 consists of two spaced contacts 40 and 41 and a central moveable contact 42, which is generally urged into contact with contact 40. Contact 42 has a downwardly extending projection 43, which is arranged to engage the body 24 as the body 24 moves into its right-hand-most position. The movement of the body 24 into its right-hand-most position urges the contact 42 out of engagement with contact 40 and into engagement with contact 41.

As will be seen in Figure 6, the motor 22 is connected to earth by a lead 35 and to the moveable contact 44 of a two-way switch 45 via a lead 46 and a diode 47. One contact 48 of a switch 45 is connected to earth, whilst the other contact 49 is connected to a source of positive potential, by lead 36. Contacts 40 and 42 are connected so that when engaged they short circuit the diode 47, whilst contacts 42 and 41 are connected such that when they are connected the lead 36 is connected to the motor 22 whatever the position of the switch 45.

When the wiper is to be used the moveable contact 44 of switch 45 is connected to contact 49 and hence the motor 22 is connected between the source of positive potential and earth and it drives screw 19. At the time the body 24 reaches its right-hand-most position the contact 42 is moved out of engagement with contact 40 and into engagement with contact 41. As the lead 35 is directly connected to the motor via switch 45 this movement has no effect.

When, however, it is desired to stop the wiper blade 15 the moveable contact 44 is switched over into connection with contact 48. If the body 24 is anywhere other than in the right-hand-most position the movement of this switch initially has no effect, because the lead 36 is still connected to the motor

- 8 -

0053425

22 by means of contacts 41 and 42. However, as the body 24 moves into its right-hand-most position the contact 42 is pushed into connection with the contact 40. disconnecting the motor from its positive source of potential and connecting it via the contact 40 and 42 to earth. This short circuiting of the motor causes the back e.m.f. in the motor to be reduced substantially to zero and so the motor is braked very quickly.

The carriage 18 is therefore stopped in its parked position as shown at 50 in Figures 1 and 2 and hence the wiper blade 15 and arm 16 are held in a position where they do not obscure an important part of the viewed surface of mirror 12.

It will be appreciated that the double helical screw could be replaced by a single screw if the motor 22 was a reversing motor. An example of such an arrangement will now be described with reference to Figures 7 and 8.

Referring firstly to Figure 7, there is shown a modification of the mirror shown in Figures 1 to 6 and like parts have been alloted the same reference numerals. The main modification is that the lead screw 19 has a single-handed thread which is engaged by co-operating threaded element or nut 52 mounted on the carriage 18. The drive motor 22 for the lead screw has a reversible drive effected by reversing the polarity of the voltage applied across the motor. Thus, by periodically reversing the motor the direction of motion of the carriage 18 and with it the wiper blade along the lead screw 19 can be reversed.

The control circuit for the motor is shown in Figure 8 and includes a double-pole limit switch having two normally-closed poles 62A and 62B respectively disposed at the right hand end of the lead screw 19 such that, when and only when the carriage 18 is in its right-hand-most position, the poles 62A 62B are open. Furthermore, a single-pole normally-open limit switch 64 is disposed at the left hand end of the lead screw 19 such that, when and only when the carriage 18 is in its left-hand-most position, the switch 64 is closed.

The right and left limit switches and the motor 22 are connected in circuit with an on-off/park switch 60, a double-pole changeover relay, having a coil 68 and changeover switches 70A, 70B, and a diode 66 in the manner shown in Figure 8.

The relay changeover switches 70A, 70B are connected so that they can reverse the polarity of the voltage applied across the motor 22. The left limit switch 64 is connected so that, when the carriage 18 reaches the left-hand-most position, the relay coil 68 is activated to operate the changeover switches 70A, 70B. The pole 62B of the right limit switch is connected so as to latch the relay 68, 70A, 70B until the carriage 18 returns to the right-hand-most position, the diode 66 preventing a momentary short circuit of the power supply at the instant when the left limit switch 64 is closed. The other pole 62A of the right limit switch is connected in parallel with the on-off/park switch 60, so that when the on-off/park switch 60 is moved to its "off/park" position, the motor 22 keeps running until the carriage 18 has returned to its right-hand-most position, i.e. its parked position. Thus, as with the embodiment shown in Figure 1 to 6, when the on-off/park switch 60 is moved to its "on" position, the wiper blade 15 is swept from side to side across the mirror 12, and when the switch 60 is returned to its "off/park" position, the wiper blade 15 continues to be swept across the mirror 12 until it reaches its parked position.

Figure 9 illustrates a further modification, wherein the motor 22 drives the lead screw 19 via a worm 80 mounted on the motor shaft engaging a wormwheel 82 mounted on the lead screw 19. This later modification may, of course, be applied to the embodiment illustrated in Figures 1 to 6.

The provision of a wiping mechanism for a rear view mirror is particularly useful during misty or cold whether. In countries where temperatures are commonly sub zero it is often a requirement that the mirror be heated. However, because of the construction of the mirror it is often difficult to put sufficient heat into the mirror to melt significantly the ice formed thereon. Even if the ice is melted, considerable misting occurs.

It will be appreciated that the provision of a wiper will remove the problem of misting and in addition will serve to free the ice as any melting occurs and therefore greatly enhance the chances of the heating element successfully clearing the mirror of ice.

CLAIMS

1.    A rear view mirror assembly comprising a mirror (12), a hollow body (11) supporting the mirror (12), a wiper (15, 16) for wiping at least part (37) of the viewed surface of the mirror (12) and drive means mounted within the body for driving the wiper (15, 16), characterised in that the drive means includes a motor (22) driven lead screw (19) and in that a driving connection (18) is provided between the lead screw (19) and wiper (15, 16) for moving the wiper (15, 16) across the mirror surface in response to rotation of the the lead screw(19).

2.    An assembly as claimed in claim 1, characterised in that said drive means further includes means to cause the wiper to be moved back and forth across the mirror.

3.    An assembly as claimed in claim 2, characterised in that the lead screw (19) has oppositely-handed helical grooves (28a, 28b) extending over a common portion of the screw (19) and the driving connection (18) has a follower (27) for following one or the other of the helical grooves (28a, 28b) to move the driving connection (18) back and forth along said common portion of the screw, the screw further having means (38) at each end of the common portion of the screw to redirect the follower (27) from one of the helical grooves to the other.

4.    An assembly as claimed in claim 3, characterised in that each redirecting means comprises an abutment (38) facing along the lead screw (19).

5.    An assembly as claimed in claim 3, characterised in that the lead screw (19) has a single-handed thread extending along the screw (19) and the driving connection (18) has means (52) to engage the thread so that rotation of the screw (19) in one direction or the other causes the driving connection (18) to be driven along the screw (19) in one direction or the other, respectively, the drive means further including means (62, 64) to reverse the direction of rotation of the lead screw (19) when the driving connection (18) reaches one or the other of a pair of spaced locations along the lead screw.

6.    An assembly as claimed in claim 5, characterised in that the motor (12) is a reversible electric motor and the reversing means includes an electrical circuit (62, 64, 66, 68, 70) for reversing the polarity of electrical supply to the motor (22).

7.    An assembly as claimed in any one of the preceding claims, characterised in that the mirror is generally rectangular.

8.    An assembly as claimed in any one of the preceding claims, characterised in that the wiper comprises a wiper arm (16) extending across a part of the surface of the mirror (12) and a wiper blade (15) mounted on the wiper arm (16), the wiper arm (16) being connected to the driving connection (18) so that the wiper blade (15) is held against the surface of the mirror (12).

9.    An assembly as claimed in any one of the preceding claims, characterised in that the body (11) has a slot (30) extending generally parallel to, or along, an edge of the body (11), the driving connection comprising a carriage (18) mounted on the lead screw (19) within the body (11) and a cantilever (29) extending from the carriage (18) through the slot (30) so that movement of the carriage (18) along the lead screw (19) causes movement of the cantilever (29) along the slot (30), the wiper (15, 16) being mounted on the free end of the cantilever (29).

10. An assembly as claimed in any one of the preceding claims, characterised in that means (39, 45, 47; 60, 62, 66) are provided for parking the wiper (15, 16) at one edge of said viewed surface or said part of the viewed surface of the mirror (12).

11. An assembly as claimed in any one of the preceding claims, characterised in that means are provided for heating the mirror (12).

GCB/KST/SA/EA 355

0053425

FIG.3.
FIG.1.
FIG.2.

0053425

FIG.4.

FIG.5.

FIG.6.

0053425

FIG. 7.

*22*
*23*
*19*
*16*
*52*
*18*
*34*
*50*

FIG. 8.

+V *36* *60* OFF/PARK

ON

*70A*

*22*

*62A*

RIGHT

*70B*

*64*

LEFT

*66*

*62B*

RIGHT

*68*

*35* 0V 0V

FIG. 9.

*22*

*80*

*19*

*82*